# EUROPÄISCHE PATENTSCHRIFT

(11) **EP 1 130 172 B1**
(45) Veröffentlichungstag und Bekanntmachung des Hinweises auf die Patenterteilung: **17.09.2003**
(21) Anmeldenummer: 01102657.2
(22) Anmeldetag: 07.02.2001
(51) Int. Cl.: E02B 3/00, E02B 1/00

(54) **Verfahren zum Behandeln eines Sees**
Method for treating a lake
Procédé pour le traitement d'un plan d'eau

(30) Priorität: 03.03.2000 DE 10010152
(43) Veröffentlichungstag der Anmeldung: 05.09.2001
(73) Patentinhaber: Langhans, Hartmut, 76227 Karlsruhe (DE)
(72) Erfinder: Langhans, Hartmut, 76227 Karlsruhe (DE)
(74) Vertreter: COHAUSZ DAWIDOWICZ HANNIG & PARTNER

(56) Entgegenhaltungen:
- FR-A- 2 167 491
- LU-A- 39 278
- US-A- 3 289 417
- US-A- 4 242 009

## Beschreibung

Die Erfindung betrifft ein Verfahren zum Entfernen von im Wasser eines Sees gelösten unerwünschten Stoffen insbesondere von Laugen, Salzen und/oder Säuren.

Zum Behandeln stark belasteter Seen ist es bekannt, die in den See fließenden Wasser vor der Einmündung zu reinigen. Diese bekannten Verfahren eignen sich nicht für Seen, die bereits in einem hohen Maße belastet sind und insbesondere keine Abflüsse besitzen.

Ein verfahren, das die Merkmale des Oberbegriffs des Anspruchs 1 aufweist, ist aus der FR-A-4 167 491 bekannt. Das bekannte Verfahren ist aufwendig.

Aufgabe der Erfindung ist es, ein Verfahren der eingangs genannten Art zu schaffen, das leicht zu handhaben ist und bei großen Seen, insbesondere ohne Abflüsse,verwendbar ist.

Diese Aufgabe wird erfindungsgemäß durch die Merkmale des Anspruchs 1 gelöst.

Durch das Abtrennen-eines Teiles des Sees, der Zuflüsse aufweist und durch einen Damm, eine Wand oder eine Mauer mit Durchlaß wird erreicht, dass das belastete Wasser aus dem abgetrennten Teil in den übrigen Seebereich fließt und durch sauberes Wasser ersetzt wird, das von den Zuflüssen stammt. Hierdurch kann insbesondere bei großen Seen erreicht werden, dass ein Teil dieses Sees nach einiger Zeit nur noch sauberes Wasser aufweist. Hierbei ist das Verfahren konstruktiv einfach und leicht zu handhaben. Es bedarf keiner aufwendigen Steuerungen. Sollte das von Zuflüssen eingehende Wasser in seiner Menge größer sein als die Durchlässe hindurchströmen lassen, so kommt es zu einem Überfluten der trennenden Einrichtung ohne hierbei seine reinigende Wirkung zu verringern.

Besonders vorteilhaft ist es, wenn der Durchlaß in der unteren Hälfte der trennenden Einrichtung angeordnet ist. Hierdurch werden die im tieferen Bereich in besonders starker Kombination vorliegenden belasteten Wasserschichten bevorzugt in den übrigen See durch den Durchlaß gebracht.

Besonders vorteilhaft ist es, wenn die trennende Einrichtung durch Aufschütten eines Damms mit Erdreich und/oder Geröll erzeugt wird. Auch sollten der oder die Durchlässe durch Rohre gebildet sein.

Vorzugsweise wird vorgeschlagen, dass der innere Querschnitt des Durchlasses so gewählt wird, dass der Wasserspiegel im abgetrennten Seeteil um 1 bis 8 m vorzugsweise 3 bis 5 m höher steht als im übrigen See. Auch kann im Durchlaß mindestens ein Absperrorgan insbesondere ein Schieber angeordnet sein. Ferner ist von Vorteil, wenn im Durchlaß eine Kraftwerksturbine angeordnet oder angeschlossen ist.

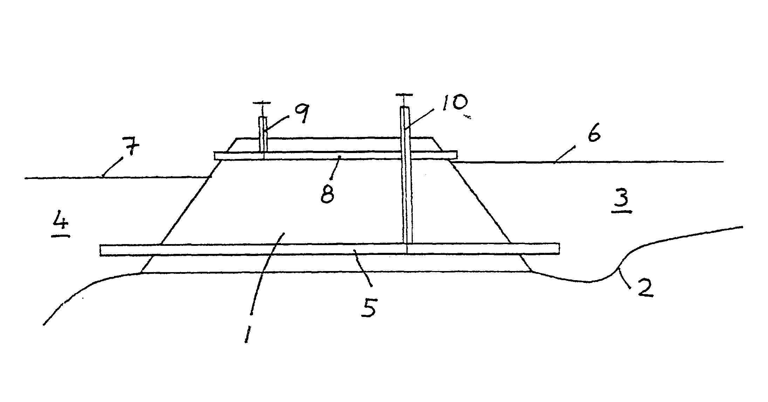

Ein Ausführungsbeispiel der Erfindung ist in der Zeichnung in einem senkrechten Schnitt dargestellt und wird im folgenden näher beschrieben.

In einem See wird insbesondere in einer Seeverengung mit nicht zu groß er Tiefe eine trennende Einrichtung in Form eines Damms 1 gebaut, der auf dem Grund des Sees steht und vorzugsweise durch Geröll aufgeschüttet wird. Dieser Damm 1 trennt einen Bereich des Sees 3 ab, der vorzugsweise kleiner ist als der verbleibende Seebereich 4.

Innerhalb der unteren Hälfte des Damms 1 sind mehrere Rohre 5 waagerecht oder leicht schräg angeordnet, die während des Aufschüttens eingebracht werden. Diese Rohre 5 verbinden die Teile 3 und 4 des Sees. Da der Seeteil 3 ständig durch die Zuflüsse mit sauberen Wasser gespeist wird, fließt das belastete Wasser vom Teil 3 durch die Rohre 5 zum Teil 4 des Sees. Nach einer bestimmten Zeit ist dann das Wasser des abgetrennten Teils 3 im wesentlichen unbelastet. Der Zeitraum hierfür ist abhängig von der Größe des abgetrennten Seeteils, von der Menge des zufließenden Wassers und der Stärke der Belastung. In der Regel muß mit mehreren Jahren gerechnet werden. Der Wasserspiegel 6 des abgetrennten Seeteils 3 ist stets um einige Meter höher als der Wasserspiegel 7 des übrigen Sees 4. Im Duchlaß bzw. in den Rohren können Absperrorgane und vorzugsweise auch Kraftwerksturbinen angeordnet oder angeschlossen sein. Vorzugsweise ist die Oberseite des Damms 1 zu einer Straße ausgebaut.

## Patentansprüche

1. Verfahren zum Entfemen von im Wasser eines Sees gelösten unerwünschten Stoffen insbesondere von Laugen, Salzen und/oder Säuren, wobei ein Teil (3) des Sees vom übrigen See (4) durch eine trennende Einrichtung (1) insbesondere durch einen Damm, eine Wand und/oder eine Mauer abgetrennt wird und die trennende Einrichtung (1) mindestens einen Durchlaß (5) aufweist, der den abgetrennten Teil (3) des Sees mit dem übrigen See (4) verbindet und der im unteren Bereich der trennenden Einrichtung angeordnet ist, **dadurch gekennzeichnet, dass** zum Ersetzen des im abgetrennten Teils (3) des Sees anwesenden belasteten Wassers dieser Teil (3) des Sees die Zuflüsse mit gering oder nicht gelasteten Wasser aufweist, so dass Wasser aus dem abgetrennten Teil des Sees zum ubrigem See (4) fliesst.

2. Verfahren nach Anspruch 1, **dadurch gekennzeichnet, dass** der Durchlaß (5) in der unteren Hälfte der trennenden Einrichtung (1) angeordnet ist.

3. Verfahren nach Anspruch 1 oder 2, **dadurch gekennzeichnet, dass** die trennende Einrichtung (1) durch Aufschütten eines Damms mit Erdreich und/oder Geröll erzeugt wird.

4. Verfahren nach einem der vorherigen Ansprüche, **dadurch gekennzeichnet, dass** der oder die Durchlässe (5) durch Rohre gebildet sind.

5. Verfahren nach einem der vorherigen Ansprüche, **dadurch gekennzeichnet, dass** der innere Querschnitt des Durchlasses (5) so gewählt wird, dass der Wasserspiegel (6) im abgetrennten Seeteil (3) um 1 bis 8 m vorzugsweise 3 bis 5 m höher steht als im übrigen See (4).

6. Verfahren nach einem der vorherigen Ansprüche, **dadurch gekennzeichnet, dass** im Durchlaß (5) mindestens ein Absperrorgan insbesondere ein Schieber angeordnet ist.

7. Verfahren nach einem der vorherigen Ansprüche, **dadurch gekennzeichnet, dass** im Durchlaß (5) eine Kraftwerksturbine angeordnet oder angeschlossen ist.

## Claims

1. A method for removing undesirable substances, in particular alkalis, salts and/or acids, dissolved in the water of a lake, whereby a part (3) of the lake is separated from the remaining lake (4) by a separating facility (1), in particular by a dam, a partition and/or a wall, and the separating facility (1) has at least one passage (5) which connects the separated part (3) of the lake to the remaining lake (4) and is arranged in the lower region of the separating facility, **characterized in that** for the purpose of replacing the polluted water present in the separated part (3) of the lake said part (3) of the lake has the inflows with slightly polluted or wholly unpolluted water, so that water flows out of the separated part of the lake to the remaining lake (4).

2. A method according to claim 1, **characterized in that** the passage (5) is arranged in the lower half of the separating facility (1).

3. A method according to claim 1 or 2, **characterized in that** the separating facility (1) is created by the making of a dam with earth and/or rubble.

4. A method according to any of the preceding claims, **characterized in that** the passage(s) (5) are formed by pipes.

5. A method according to any of the preceding claims, **characterized in that** the inner cross-section of the passage (5) is selected such that the water level (6) in the separated part (3) of the lake is 1 to 8 m, preferably 3 to 5 m, higher than the level in the remaining lake (4).

6. A method according to any of the preceding claims, **characterized in that** at least one shutoff device, in particular a slide valve, is arranged in the passage (5).

7. A method according to any of the preceding claims, **characterized in that** a power plant turbine is arranged or connected in the passage (5).

## Revendications

1. Un procédé pour remplacer des éléments non souhaités en solution dans l'eau d'un lac, en particulier des bases, des sels et/ou des acides, cependant qu'une partie (3) du lac est séparée du reste du lac (4) par un dispositif (1) de séparation, en particulier par une digue, une cloison et/ou un mur, et que le dispositif (1) de séparation présente au moins un passage (5), qui relie la partie (3) séparée du lac au reste du lac (4) et qui est disposé dans la partie inférieure du dispositif de séparation, **caractérisé en ce que**, pour le remplacement de l'eau souillée présente dans la partie (3) séparée du lac, les afflux d'eau de cette partie (3) du lac sont faiblement ou aucunement souillés, de façon à ce que de l'eau s'écoule hors de la partie séparée du lac, vers le reste du lac (4).

2. Un procédé selon la revendication n° 1, **caractérisé en ce que** le passage (5) est disposé dans la moitié inférieure du dispositif (1) de séparation.

3. Un procédé selon la revendication n° 1 ou n° 2, **caractérisé en ce que** le dispositif (1) de séparation est créé par déversement d'une digue par de la terre et/ou des cailloux.

4. Un procédé selon une des revendications précédentes, **caractérisé en ce que** le ou les passages (5) sont formés par des tubes.

5. Un procédé selon une des revendications précédentes, **caractérisé en ce que** la section intérieure du passage (5) est choisie de telle façon, que le niveau (6) d'eau de la partie (3) séparée du lac est supérieur de 1 à 8 m, de préférence entre 3 et 5 m, à celui du reste du lac (4).

6. Un procédé selon une des revendications précédentes, **caractérisé en ce que** au moins un organe de séparation, en particulier un coulisseau, est disposé dans le passage (5).

7. Un procédé selon une des revendications précédentes, **caractérisé en ce que** une turbine de centrale électrique est disposée dans le passage (5) ou lui est raccordée.
